# EUROPÄISCHE PATENTSCHRIFT

(11) **EP 1 162 017 B1**
(45) Veröffentlichungstag und Bekanntmachung des Hinweises auf die Patenterteilung: **21.05.2003**
(21) Anmeldenummer: 01106741.0
(22) Anmeldetag: 17.03.2001
(51) Int. Cl.: B23B 31/02

(54) **Schrumpffutter**
Shrink fit chuck
Mandrin à ajustement fretté

(30) Priorität: 09.06.2000 DE 10028720
(43) Veröffentlichungstag der Anmeldung: 12.12.2001
(73) Patentinhaber: Emuge-Werk Richard Glimpel Fabrik für Präzisionswerkzeuge (vormals Moschkau & Glimpel), D-91207 Lauf (DE)
(72) Erfinder: Turbanisch, Peter, 91564 Neuendettelsau (DE)
(74) Vertreter: Matschkur, Peter

(56) Entgegenhaltungen:
- DE-A- 19 844 018

## Beschreibung

Die Erfindung bezieht sich auf ein Schrumpffutter mit einem klemmend in der gegenüber dem Durchmesser des Werkzeugschaftes kleiner dimensionierten Werkzeugaufnahme des Futterkörpers gehalterten Werkzeug, das durch induktives Erwärmen des Futterkörpers, der aus einem Material mit einem höheren Wärmeausdehnungskoeffizienten besteht als das Werkzeug einsetzbar bzw. herausnehmbar ist, insbesondere zum Spannen von HSS-Werkzeugen.

Ein solches Schrumpffutter ist z.B. aus DE-A-19844018 bekannt.

Die einseitige Erwärmung des Futterkörpers zur Aufweitung der Werkzeugaufnahme und zum Einsetzen des Werkzeugs ist - völlig unabhängig davon, auf welche Art und Weise die Erwärmung erfolgt - völlig unproblematisch, da hier ja der Futterkörper und das Werkzeug noch getrennt sind. Schwierigkeiten bereitet aber das Herausnehmen des Werkzeugs, da bei der hierfür erforderlichen Erwärmung des Futterkörpers zwangsläufig und unvermeidlich auch eine Erwärmung des Werkzeugschaftes mit stattfindet, die der Öffnungsbewegung durch Aufweiten der Werkzeugaufnahme entgegenwirkt. Bei üblichen Stählen für die Futterkörper mit einem thermischen Ausdehnungskoeffizienten von 12 µm/mK und Hartmetallwerkzeugen mit einem thermischen Ausdehnungskoeffizienten von 6 µm/mK ergeben sich trotz der Miterwärmung des Werkzeugschaftes ausreichende Aufweitungsunterschiede zwischen der Werkzeugaufnahme und dem Werkzeugschaft, so dass auch in diesen Fällen relativ unproblematisch eine Entnahme des Werkzeugs durch Erwärmung des Futterkörpers möglich ist.

Erhebliche Probleme ergeben sich allerdings durch die Verwendung von Werkzeugen aus Schnellstahl, die ebenfalls einen thermischen Ausdehnungskoeffizienten von etwa 12 µm/mK aufweisen. In diesen Fällen lässt sich das Werkzeug praktisch überhaupt nicht mehr aus dem Futter herausnehmen, da jede Erwärmung des Futters auch eine Erwärmung des Werkzeugs und damit eine nahezu gleiche Ausdehnung zur Folge hat. Die Wahl eines anderen Materials für den Futterkörper mit höherem Wärmeausdehnungskoeffizienten scheitert aber bei den in jüngster Zeit zunehmend in Gebrauch kommenden Schrumpfanordnungen unter Verwendung einer induktiven Heizung für das Schrumpffutter, da derartige Materialien meist nur schwach oder überhaupt nicht magnetisch sind und deshalb mit einer solchen induktiven Heizung nicht rasch und einfach auf die notwendigen Temperaturen zum Einsetzen oder Herausnehmen des Werkzeugs erhitzt werden können.

Der Erfindung liegt daher die Aufgabe zugrunde, ein Schrumpffutter der eingangs genannten Art, bei dem der Futterkörper durch induktive Erwärmung aufgeheizt werden soll, so auszugestalten, dass auch HSS-Werkzeuge mit hohem Ausdehnungskoeffizienten einsetzbar bzw. herausnehmbar sind.

Zur Lösung dieser Aufgabe ist erfindungsgemäß vorgesehen, dass der Futterkörper aus einem nicht- oder schwach-magnetischen Stahl mit einem hohen Wärmeausdehnungskoeffizienten, vorzugsweise α > 12 µm/mK, besteht und dass in den Futterkörper ferritische Bauteile eingebaut sind.

Durch die erfindungsgemäße Ausbildung ist einerseits eine induktive Erwärmung des Futterkörpers möglich, wobei der Futterkörper selbst indirekt durch die eingebauten ferritischen Bauteile erwärmt wird. Andererseits ist durch die Ausbildung des Futterkörpers aus einem nicht- oder nur schwach-magnetischen Stahl eine Materialauwahl möglich, derart, dass ein hoher Wärmeausdehnungskoeffizient des Futterkörpers größer als der Wärmeausdehnungskoeffizient der HSS-Werkzeuge gegeben ist, so dass bei der Erwärmung ausreichende Aufweitungsunterschiede zwischen der Werkzeugaufnahme und dem Werkzeugschaft gegeben sind.

Neben der Möglichkeit in, vorzugsweise achsparallele, Bohrungen des Futterkörpers ferritische Stäbe einzupressen bzw. in den Futterkörper ferritische Büchsensegmente einzupressen, kann in weiterer Ausgestaltung der Erfindung auch vorgesehen, dass in die Schrumpfbohrung des Futterkörpers eine ferritische Büchse fest oder austauschbar eingesetzt ist. Im Falle eines festen Einbaus, durch Schweißen, Kleben, Klemmen, Schrauben oder Löten, können gegebenenfalls Trennfugen vorgesehen sein, damit diese Büchse der Dehnung besser folgen kann und die gegebenenfalls auch zusätzlich als Kühlmittelkanäle nutzbar sind. Im Fall einer austauschbaren Ausbildung der ferromagnetischen in die Werkzeugaufnahme des Futterkörpers einzusetzenden Büchse kann diese, vorzugsweise durch Schlitzung, radial federnd ausgebildet sein, so dass sie auf diese Art und Weise der stärkeren Aufweitung des Futterkörpers folgen kann, ohne den thermisch leitenden Kontakt damit zu verlieren. Diese Austauschbarkeit einer solchen ferritischen Büchse hat darüber hinaus auch noch den Vorteil, dass sie als Reduzierung ausgenutzt werden kann, um ein und demselben Futterkörper zur Aufnahme von Werkzeugen mit unterschiedlichem Durchmesser des Werkzeugschaftes zu verwenden. Mit Vorteil kann dabei weiter vorgesehen sein, dass eine solche ferritische Büchse gehärtet ist.

Anstelle des Einbaus einer ferritischen Büchse kann gemäß einem weiteren Merkmal der vorliegenden Erfindung auch vorgesehen sein, dass der Futterkörper in der Schrumpfbohrung und/oder am die Schrumpfbohrung umgebenden Außenmantel mit ferritischem Material beschichtet ist. Durch die Beschichtung ergibt sich eine so feste Anhaftung, dass trotz der thermischen Ausdehnungsunterschiede der mechanische Kontakt zwischen den beiden unterschiedlichen Werkstoffen bestehen bleibt.

Schließlich liegt es auch noch im Rahmen der Erfindung, den Einbau ferritischer Bauteile in den Futterkörper in der Weise zu gestalten, dass Aussparungen im Futterkörper mit ferritischem Material, z. B. in Form von Pulver, Kugeln oder Ausgießmasse, aufgefüllt sind.

Weitere Vorteile, Merkmale und Einzelheiten der Erfindung ergeben sich aus der nachfolgenden Beschreibung einiger, anhand schematischer Teilschnitte durch das erfindungsgemäß ausgestaltete Schrumpffutter beschriebener, Ausführungsbeispiele. In den Figuren ist dabei jeweils ein schematischer Schnitt durch den konischen Aufnahmeabschnitt eines erfindungsgemäßen Schrumpffutters dargestellt, während beispielsweise die maschinenseitige Futterkörperaufnahme völlig weggelassen worden ist, da es ja im Rahmen der vorliegenden Erfindung auf die diesbezügliche Ausgestaltung überhaupt nicht ankommt.

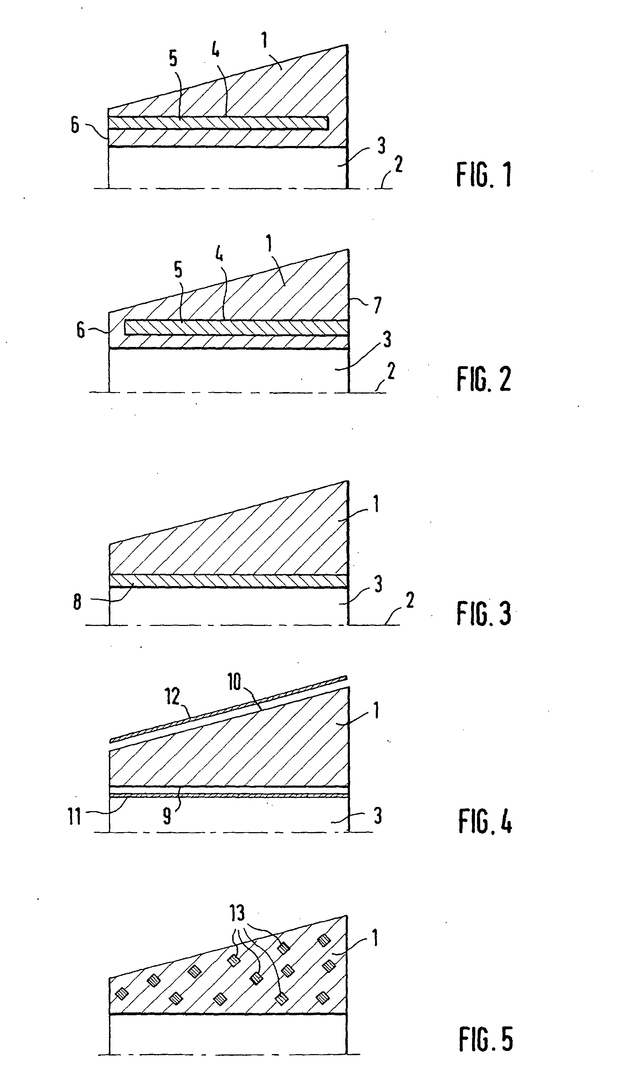

In Fig. 1 erkennt man die nur zur Hälfte oberhalb der Schrumpffutter-Längsachse 2 dargestellte Werkzeugaufnahme 3. Der Futterkörper 1 besteht aus einem nicht-magnetischen oder schwach-magnetischen Stahl, der hohe Wärmeausdehnungskoeffizienten α > 12 µm/mK aufweisen soll, der aber wegen der fehlenden magnetischen Eigenschaften nicht induktiv erwärmt werden kann. Um dies trotzdem durchführen zu können, ist in über den Umfang des Futterkörpers, vorzugsweise äquidistant, verteilten Bohrungen 4, ein ferritisches Material eingefüllt, entweder in Form von Kugeln, Pulver oder einer Ausgießmasse oder aber durch Einschieben entsprechender ferritischer Stäbe 5.

Während beim Ausführungsbeispiel nach Fig. 1 das Einbringen der ferritischen Bauteile 5 in die Bohrungen 4 von vorne, also von der vorderen Stirnfläche 6 des Futterkörpers aus erfolgt, ist die Ausbildung bei der Anordnung nach Fig. 2 so getroffen; dass die Bohrungen 4 nach hinten, also zur maschinenseitigen Stirnfläche 7 hin, offen sind, so dass man den Einbau der ferritischen Bauteile 5 von außen überhaupt nicht erkennen kann.

Beim Ausführungsbeispiel nach Fig. 3 ist in die Werkzeugaufnahme 3 des Futterkörpers 1 eine Büchse 8 aus ferritischem Material eingebaut, die entweder fest mit dem Futterkörper 1 verbunden sein kann, oder aber auch austauschbar als Reduzierung für den Durchmesser der Werkzeugaufnahme 3 ausgestaltet sein kann. In dem letzteren Fall einer Austauschbarkeit sollte die Büchse 8 aus ferritischem Material radial federnd sein, so dass sie unabhängig von der stärkeren Aufweitung des eigentlichen Futterkörpers 1 aus nicht-magnetischem oder schwach-magnetischem Material, dessen Aufweitung folgen kann und stets in thermisch leitendem Kontakt mit ihm steht, damit die durch die induktive Erwärmung im ferritischen Material entstehende Wärme auch tatsächlich an den eigentlichen Futterkörper 1 weitergegeben werden kann.

Die Fig. 4 zeigt schematisch eine Ausbildung, bei der entweder auf die Innenfläche 9 der Werkzeugaufnahme 3 oder den sie umgebenden Außenmantel 10 des Futterkörpers 1 eine zur Verdeutlichung in einem geringen Abstand dargestellte dünne Beschichtung 11 bzw. 12 aufgebracht ist.

Die Fig. 5 zeigt schließlich schematisch den Aufbau einer Sonderlegierung für ein erfindungsgemäßes Schrumpffutter, wobei in den Futterkörper 1 ferritische Anteile 13 unmittelbar bei der Fertigung mit eingebaut worden sind.

Die Erfindung ist nicht auf die dargestellten Ausführungsbeispiele beschränkt. Entscheidend ist, dass ein erfindungsgemäßes Schrumpffutter einen Futterkörper aus einem nicht-magnetischen oder nur schwach-magnetischen Material aufweist, das erheblich höhere thermische Ausdehnungskoeffizienten besitzt als ferromagnetische Stähle, so dass das Ein- und Ausschrumpfen durch entsprechende Dehnungsunterschiede zwischen dem Schrumpffutter und dem Werkzeug möglich ist, wobei aber auf der anderen Seite durch den Einbau ferritischer Bauteile eine Konfiguration erzielt wird, die eine induktive Erwärmung möglich macht, was an sich bei nicht-magnetischen oder schwach-magnetischen Stählen ausgeschlossen ist. Die induktive Erwärmung setzt an den ferritischen eingebauten Bauteilen an und diese geben die Wärme durch direkten Kontakt an das Schrumpffutter mit dem hohen thermischen Ausdehnungskoeffizienten weiter.

## Patentansprüche

1. Schrumpffutter mit einem klemmend in der gegenüber dem Durchmesser des Werkzeugschaftes kleiner dimensionierten Werkzeugaufnahme des Futterkörpers gehalterten Werkzeug, das durch induktives Erwärmen des Futterkörpers, der aus einem Material mit einem höheren Wärmeausdehnungskoeffizienten besteht als das Werkzeug einsetzbar bzw. herausnehmbar ist, insbesondere zum Spannen von HSS-Werkzeugen, **dadurch gekennzeichnet, dass** der Futterkörper (1) aus einem nicht- oder schwach-magnetischen Stahl mit einem hohen Wärmeausdehnungskoeffizienten (α > 12 µm/mK) besteht und dass in den Futterkörper (1) ferritische Bauteile eingebaut sind.

2. Schrumpffutter nach Anspruch 1, **dadurch gekennzeichnet, dass** der Wärmeausdehnungskoeffizient des Futterkörpers (1) α > 12 µm/mK ist.

3. Schrumpffutter nach Anspruch 1 oder 2, **dadurch gekennzeichnet, dass** in vorzugsweise achsparallele Bohrungen (4) des Futterkörpers (1) ferritische Stäbe eingepresst sind.

4. Schrumpffutter nach Anspruch 1 oder 2, **dadurch gekennzeichnet, dass** in den Futterkörper (1) ferritische Büchsensegmente eingepresst sind.

5. Schrumpffutter nach Anspruch 1 oder 2, **dadurch gekennzeichnet, dass** Aussparungen im Futterkörper (1) mit ferritischem Material, z. B. in Form von Pulver, Kugeln oder Ausgießmasse, aufgefüllt sind.

6. Schrumpffutter nach Anspruch 1 oder 2, **dadurch gekennzeichnet, dass** in die Schrumpfbohrung des Futterkörpers (1) eine ferritische Büchse (8) eingesetzt ist.

7. Schrumpffutter nach Anspruch 6, **dadurch gekennzeichnet, dass** die Büchse (8) fest eingebaut ist.

8. Schrumpffutter nach Anspruch 6, **dadurch gekennzeichnet, dass** die austauschbare ferritische Büchse (8), vorzugsweise durch Schlitzung, radial federnd ausgebildet ist.

9. Schrumpffutter nach einem der Ansprüche 6 bis 8, **dadurch gekennzeichnet, dass** die ferritische Büchse (8) gehärtet ist.

10. Schrumpffutter nach einem der Ansprüche 1 bis 9, **dadurch gekennzeichnet, dass** der Futterkörper (1) in der Schrumpfbohrung und/oder am die Schrumpfbohrung umgebenden Außenmantel mit einer Beschichtung (11, 12) aus ferritischem Material versehen ist.

## Claims

1. Shrink-fit chuck with a tool mounted grippingly in the tool seat of the chuck body, which tool seat has a smaller diameter than that of the tool shank, the tool being insertable and removable by inductive heating of the chuck body which consists of a material with a higher coefficient of expansion than the tool, in particular for clamping HSS tools, **characterised in that** the chuck body (1) consists of a non-magnetic or weakly magnetic steel with a high coefficient of expansion (α>12µm/mK) and **in that** ferritic components are incorporated in the chuck body (1).

2. Shrink-fit chuck according to claim 1, **characterised in that** the coefficient of expansion of the chuck body (1) is α>12µm/mK.

3. Shrink-fit chuck according to claim 1 or 2, **characterised in that** ferritic rods are forced into bores (4) of the chuck body (1) which are preferably parallel to the axis.

4. Shrink-fit chuck according to claim 1 or 2, **characterised in that** ferritic bush segments are forced into the chuck body (1).

5. Shrink-fit chuck according to claim 1 or 2, **characterised in that** recesses in the chuck body (1) are filled with ferritic material, e.g. in the form of powder, balls or casting compound.

6. Shrink-fit chuck according to claim 1 or 2, **characterised in that** a ferritic bush (8) is inserted into the shrink-fit bore of the chuck body (1).

7. Shrink-fit chuck according to claim 6, **characterised in that** the bush (8) is permanently fitted.

8. Shrink-fit chuck according to claim 6, **characterised in that** the exchangeable ferritic bush (8) is formed so as to be radially resilient, preferably by slitting.

9. Shrink-fit chuck according to one of claims 6 to 8, **characterised in that** the ferritic bush (8) is hardened.

10. Shrink-fit chuck according to one of claims 1 to 9, **characterised in that** the chuck body (1) is provided in the shrink-fit bore and/or on the outer casing surrounding the shrink-fit bore with a coating (11, 12) of ferritic material.

## Revendications

1. Mandrin à serrage par retrait associé à un outil qui est retenu, en s'y bloquant, dans le logement d'outil, doté de dimensions réduites par rapport au diamètre de la tige de l'outil, du corps du mandrin, et qui peut être mis en place ou retiré par le biais d'un échauffement par induction du corps du mandrin, lequel est réalisé en un matériau présentant un coefficient de dilatation thermique plus élevé que celui de l'outil, notamment pour le montage d'outils HSS, **caractérisé en ce que** le corps (1) du mandrin est réalisé en un acier amagnétique ou faiblement magnétique, présentant un coefficient de dilatation thermique élevé (α>12 µm/mK), et **en ce que** des éléments ferritiques sont incorporés dans le corps (1) du mandrin.

2. Mandrin à serrage par retrait selon la revendication 1, **caractérisé en ce que** le coefficient de dilatation thermique du corps (1) du mandrin est de α>12 µm/mK.

3. Mandrin à serrage par retrait selon la revendication 1 ou 2, **caractérisé en ce que** dans des forures (4) du corps (1) du mandrin, de préférence parallèles à l'axe de ce dernier, sont encastrés des barreaux de ferrite.

4. Mandrin à serrage par retrait selon la revendication 1 ou 2, **caractérisé en ce que** dans le corps (1) du mandrin, sont encastrés des secteurs de douille en ferrite.

5. Mandrin à serrage par retrait selon la revendication 1 ou 2, **caractérisé en ce que** des évidements ménagés dans le corps (1) du mandrin sont remplis d'un matériau ferritique, par exemple sous forme de poudre, de billes ou d'une matière susceptible d'être coulée.

6. Mandrin à serrage par retrait selon la revendication 1 ou 2, **caractérisé en ce que** dans l'alésage de serrage par retrait du corps (1) du mandrin, est insérée une douille (8) en ferrite.

7. Mandrin à serrage par retrait selon la revendication 6, **caractérisé en ce que** la douille (8) est incorporée à demeure.

8. Mandrin à serrage par retrait selon la revendication 6, **caractérisé en ce que** la douille (8) en ferrite, qui peut être changée, est dotée d'une élasticité radiale, de préférence par la réalisation de fentes.

9. Mandrin à serrage par retrait selon l'une des revendications 6 à 8, **caractérisé en ce que** la douille (8) en ferrite est durcie.

10. Mandrin à serrage par retrait selon l'une des revendications 1 à 9, **caractérisé en ce que** le corps (1) du mandrin est pourvu, dans l'alésage de serrage par retrait et/ou sur la surface périphérique extérieure entourant l'alésage de serrage par retrait, d'un revêtement (11, 12) en un matériau ferritique.
